(19) Europäisches Patentamt / European Patent Office / Office européen des brevets

(11) **EP 4 686 845 A1**

(12) **EUROPEAN PATENT APPLICATION**

(43) Date of publication:
04.02.2026 Bulletin 2026/06

(21) Application number: 25190235.9

(22) Date of filing: 17.07.2025

(51) International Patent Classification (IPC):
*F16C 19/38* (2006.01)     *F16C 23/08* (2006.01)
*F16C 33/46* (2006.01)     *F16C 33/48* (2006.01)
*F16C 33/54* (2006.01)

(52) Cooperative Patent Classification (CPC):
**F16C 19/38; F16C 23/086; F16C 33/4676;**
**F16C 33/4682; F16C 33/485; F16C 33/541;**
**F16C 33/543;** F16C 2240/44; F16C 2300/14;
F16C 2360/31

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: 30.07.2024 DE 102024207174

(71) Applicant: Aktiebolaget SKF
415 50 Göteborg (SE)

(72) Inventors:
• Reichert, Juergen
97499 Donnersdorf (DE)
• **Hofmann, Sabine**
**97273 Kürnach (DE)**
• **Weigand, Stefan Manfred**
**97517 Rannungen (DE)**
• **Jolkin, Alexei**
**41574 Göteborg (SE)**
• **Ramachandran, Sankar**
**43145 Mölndal (SE)**
• **Sahlgren, Johan**
**43136 Mölndal (SE)**

(74) Representative: **Kuhstrebe, Jochen**
**SKF GmbH**
**Gunnar-Wester-Straße 12**
**97421 Schweinfurt (DE)**

(54) **BEARING CAGE FOR A SPHERICAL ROLLER BEARING**

(57) Disclosed is a spherical roller (100) bearing having at least an outer ring (104) with a diameter of at least 499 mm, an inner ring (106), and two sets of spherical rollers (12) which are rolling along raceways (109; 11) formed on the outer and inner ring (104; 106), wherein each set of spherical rollers (112) is accommodated in a bearing cage (1), wherein each bearing cage (1) comprises at least: a first cage ring (2) extending in a circumferential direction of the bearing, a second cage ring (4) extending in the circumferential direction of the bearing and a plurality of cage bars (6), each cage bar (6) extending substantially in an axial direction (A) of the bearing from the first cage ring (2) to the second cage ring (4) such that closed pockets (8) are formed, wherein each pocket (8) is configured to receive one spherical roller (12), wherein each cage bar separates two adjacent pockets and has a circumferential side face facing the first pocket and a second circumferential side face facing the second pocket, wherein each circumferential side face of the bearing cage bars (6) is, in axial direction, provided with a first contact area (10-1) and second contact area (10-2) configured to at least partially contact the spherical roller (12), wherein at least one of the first and second contact areas (10) has a convex curvature (17) in radial direction (R).

Processed by Luminess, 75001 PARIS (FR)

(Cont. next page)

Fig. 2

## Description

### Technical field of the invention

The present invention relates to a spherical roller bearing with a bearing cage.

### Background of the invention

Rolling bearings are common mechanical components for many different applications. There are different types of rolling bearings that are designed to meet different requirements. Depending on the conditions of the particular application, i.e., the load level, the rotational speed, the temperature, etc., there are different types of suitable rolling bearings.

A common type of bearing is a spherical roller bearing. These bearings may be designed to accommodate large radial loads and/or axial loads and it is also designed to accommodate flexing of a shaft supported by the bearings, i.e., the bearing rings can be relatively misaligned. Therefore, such bearings are particularly suitable for a plurality of industrial applications such as machines in wind turbines, automotive, and the like.

In most demanding industrial applications for spherical roller bearings, most bearing failures are usually related to increased wear often associated with insufficient lubrication. Usually, the spherical roller bearings are relubricated in operation. The spherical roller bearing may generally comprise two set of rollers and the relubrication may be done at a special bore in the outer ring in the middle between both set of rollers to simultaneously lubricate both set of rollers. Also, by adding fresh lubricant it may be possible to flush any particles from the bearing that could otherwise increase the risk for surface-initiated fatigue. However, in most spherical roller bearings the spherical rollers are retained in a cage which usually has a central ring element, which may act as an obstacle for the added lubricant. Additionally, insufficient lubrication may be caused by undesired contact between an edge and a running surface of the roller element. Such an undesired contact may, for example, occur between an edge of a cage configured to retain the roller elements and the roller element itself.

It is therefore object of the present invention to provide an improved bearing cage for a spherical roller bearing reducing the risk of an undesired edge contact between a running surface of the roller and the bearing cage.

### Summary of the invention

This object is solved by a spherical roller bearing according to claim 1.

In the following a spherical roller bearing having at least an outer ring with a diameter of at least 499 mm, an inner ring, and two sets of spherical rollers which are rolling along raceways formed on the outer and inner ring, is provided, wherein each set of spherical rollers is accommodated in a bearing cage. Each bearing cage comprises a first cage ring extending in a circumferential direction of the bearing, a second cage ring extending in the circumferential direction of the bearing and a plurality of cage bars, each cage bar extending substantially in an axial direction of the bearing from the first cage ring to the second cage ring such that closed pockets are formed, wherein each pocket is configured to receive one spherical roller. Further, each cage bar separates two adjacent pockets and has a circumferential side face facing the first pocket and a second circumferential side face facing the second pocket.

For providing an improved lubrication, each circumferential side face of the bearing cage bars is, in axial direction, provided with a first contact area and second contact area configured to at least partially contact the spherical roller, wherein at least one of the first and second contact areas has a convex curvature in the radial direction.

By providing two contact areas which are axially separated, the overall contact area between rollers and cage bars is reduced, which allows for an improved lubrication. Additionally, the two axially spaced apart contact areas provide optimal guiding properties and reduce the risk of rollers interleaving in the pockets, as the spherical roller bearings are contacted and guided at two axially spaced apart contact areas.

However, thereby it is further preferred that the convex curvature in one contact area extends in axial direction along the entire contact area. This ensures that the spherical roller element is sufficiently guided in the pocket. Additionally, this allows for reducing the risk of a contact between an edge of the cage and the roller. This leads to a further improved lubrication of the roller bearing even under cage deformation and/or under wear of cage bar.

For improving the guidance and reducing the risk of rollers interleaving in the pocket, it is further preferred that at least one contact area has in axial direction a concave curvature, which is adapted to a curvature of the spherical roller, so that an osculation is provided between the spherical roller and said contact area.

According to a further preferred embodiment, the cage bar is in axial direction equipped with a concave curvature between the two contact areas. Thereby, in a top view, the cage bar has an hourglass shape. Thereby it is ensured that the spherical roller is at least in contact with the cage bar at the dedicated two contact areas. In case the spherical rollers are only in contact with the cage bar at the dedicated two contact areas, the additional space between spherical roller and cage bar, which is provided by the concave curvature, allows for lubricant to present in this area. Additionally, in this area lubricant cannot be scraped off.

According to a further preferred embodiment, the cage bar itself extends substantially straight from the first cage ring to the second cage ring. This allows for a simple manufacturing of the cage.

According to a further embodiment, not only the cage bars but in addition, also, the first cage ring and/or second cage ring may be equipped with a convex curvature. Thereby, it is preferred that the cage rings are only equipped with a single contact area with convex curvature, wherein the contact area is configured to contact an axial side face of the roller element.

Furthermore, the convex curvature at the cage bars and/or at the cage rings reduces the risk of an undesired edge contact between a running surface of the spherical roller and the bearing cage. This may further reduce the risk that a lubricant film may be scraped off at a point and/or line of contact between the cage and the roller. **In** particular, a drawback of straight profiles and profiles extending along the entire axial length of the cage bars, which so far have been used in contact areas, is that these profiles may often only allow for very small gaps between spherical roller and cage bar for the lubricating film to enter such that there is a high risk of the lubricating film being scraped off. Providing the first and second contact area with a profile having a convex curvature may allow for larger gaps between spherical roller and cage bar for the lubricating film to enter, thereby reducing the risk that the lubricating film is scraped off.

Preferably, the convex curvature at at least one of the contact areas elevates from an imaginary flat plane by at least 0.1mm, preferably at least 0.3mm, and even more preferred at least 0.5mm. With other words, a difference between the convex curvature and a straight line at a position of a maximal distance between the convex curvature and the straight line is at least 0.1mm, preferably at least 0.3mm, and even more preferred at least 0.5mm. This allows for an optimized lubrication and guidance of the spherical rollers.

According to a further embodiment, the convex curvature may be arranged in radial direction at least in the middle of at least one of the contact areas.

Having the convex curvature in a center or middle of the contact area in radial direction may allow to reduce the risk of a contact between an edge of the cage bar and the roller even further. This may lead to a further improved lubrication of the roller bearing even under cage deformation and/or under wear of cage bar and/or large radial cage clearance. In addition, this may also lead to a larger gap between the roller element and the contact area allowing for an improved lubricant ingress into the gap and/or for a buildup of a larger lubricating film.

In addition or alternatively, the convex curvature may be arranged in radial direction at least at an edge of at least one of the contact areas.

Having the convex curvature at an edge of the contact area in the radial direction may ensure that a lubrication film is not scraped off at the contact. This may lead to an improved service life of a roller bearing even under cage deformation and/or under wear of cage bar and/or large radial cage clearance. In addition, this may also lead to a larger gap between the roller element and the contact area allowing for an improved lubricant ingress into the gap and/or for a buildup of a larger lubricating film.

According to a further embodiment, at least one of the contact areas may comprise in radial direction at least a first section and a second section, wherein at least one of the first and second section has the convex curvature.

Having a contact area with at least a first section and a second section, wherein at least one of the first and second section has a convex curvature, has the advantage that the risk of an undesired edge runner between the roller and the cage may be further reduced.

According to a further preferred embodiment, the first section may have a first convex curvature, and the second section may have a second convex curvature, wherein the first convex curvature is different from the second convex curvature. Providing two different convex curvatures allows to further improve the lubrication between the cage bar and the spherical roller.

Thereby, it is further preferred that the first section is arranged in the middle of at least one contact area and the second section is arranged at an edge of said contact area. With other words, a curvature at an edge of the contact area in radial directions may differ from a curvature in the middle of the contact area in radial directions.

Different curvatures at an edge of the contact area and at the middle of the contact area may lead to a better lubrication at the roller contact.

According to a further preferred embodiment, the bearing cage is manufactured from a sheet metal plate. Using sheet metal as the base material for the bearing cage has the advantage of reducing the costs for the at least one cage.

Furthermore, the at least one contact area may be formed by coining. This allows to reduce the manufacturing costs for the bearing cage.

Further preferred embodiments are defined in the dependent claims as well as in the description and the figures. Thereby, elements described or shown in combination with other elements may be present alone or in combination with other elements without departing from the scope of protection.

Brief description of the drawings

In the following, preferred embodiments of the invention are described in relation to the drawings, wherein the drawings are exemplarily only, and are not intended to limit the scope of protection. The scope of protection is defined by the accompanied claims, only.

The figures show:

    Fig. 1: shows a schematic cross section of a spherical roller bearing according an embodiment,

    Fig. 2: shows a schematic top section of a bearing cage for a spherical roller bearing according to the embodiment,

Fig. 3: shows a schematic axial cross section of the bearing cage according to the embodiment, and

Fig. 4: shows a schematic cross section of a cage bar of the bearing cage according to the embodiment.

Detailed description of the invention

In the following same or similar functioning elements are indicated with the same reference numerals.

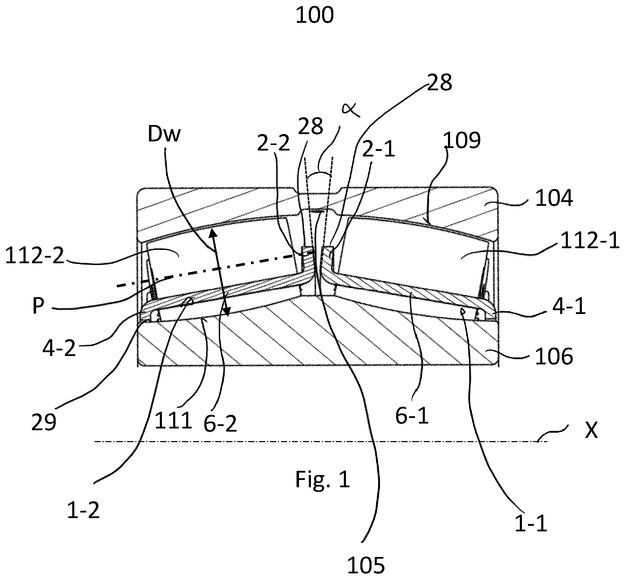

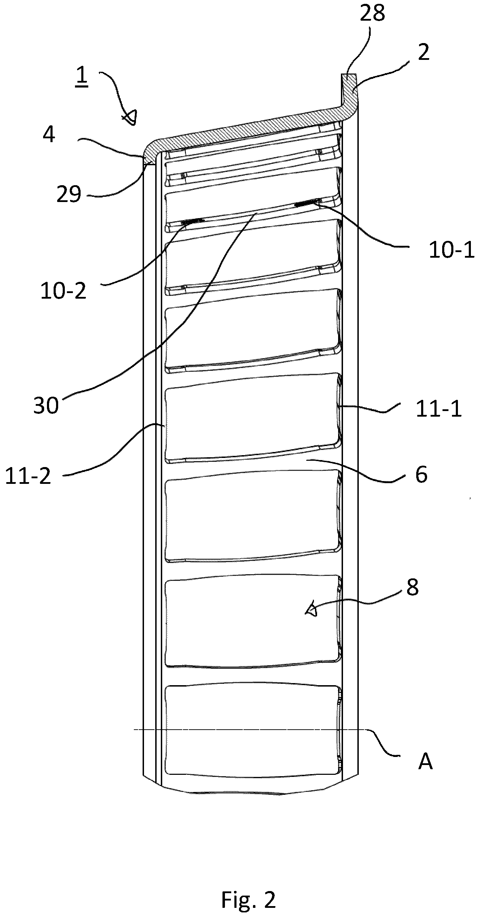

Fig. 1 shows a spherical roller bearing 100 for supporting a wind turbine main shaft having a first set of spherical rollers 112-1 and a second set of spherical rollers 112-2, which are retained in a first cage 1-1 and a second cage 1-2. In Figs. 2 to 4 one of the cages 1 is further illustrated.

The spherical roller bearing 100 comprises an outer ring 104, and an inner ring 106, two set of spherical rollers 112 which are rolling along raceways 109 formed on the outer ring 104 and on raceways 111 formed on the inner ring 106. The outer ring 104 comprises an opening 105 through which lubricant can be provided to the spherical roller bearing 100. In particular, the outer ring 104 may be stationary, while the inner ring 106 may rotate around a rotation axis X. Furthermore, the inner ring 106 may be a configured to be mounted on a main shaft of a wind turbine.

The inner ring 106 may be formed with flanges or without flanges on an axial inner side and/or an axial outer side. The spherical roller bearing 100 shown in Fig. 1 is formed without flanges on both the axial inner side and the axial outer side of the inner ring 106.

Furthermore, the spherical roller bearing comprises a first cage 1-1 configured to retain the first set of spherical rollers 112-1, and a second cage 1-2 configured to retain the second set of spherical rollers 112-2. The first and second cage 1-1, 1-2 are identical in shape. Figs. 2 to 4 show the cage 1 in detail.

In addition, both the first cage 1-1 and the second cage 1-2 may be free of any means for holding the spherical roller 12 in in a pocket 8. In other words, the cages 1 do neither comprise means for snapping the spherical rollers 12 into the cages 1 nor dimples formed on the axial end faces of the pockets 8 for engaging with recesses formed on end faces of the spherical rollers 12.

Furthermore, the cage 1 can be mounted or installed into the spherical roller bearing 100 without elastically and/or plastically deforming the cage 1 and/or without disassembling or cutting the cage 1.

As can be seen in Figs 1 to 4, each cage 1-1, 1-2 comprises a first cage ring 2-1, 2-2 extending in a circumferential direction of the bearing, a second cage ring 4-1, 4-2 axially spaced from the first cage ring 2-1, 2-2 and connected to it with a plurality of cage bars 6 thereby forming closed pockets 8. Each pocket 8 is configured to receive one spherical roller 12. In particular, each cage 1 may be integrally formed.

The first cage ring 2 has a flange element 28 radially to the outside, and the second cage ring 4 has a flange element 29 radially extending to the inside.

The free ends of the flange elements 28 of the first cage rings 2 are inclined in direction towards the spherical roller 12 such that the free ends form an opening angle α. Preferably the opening angle α is in the range between 2° and 40°.

Moreover, the cage bars 6 are at least partially arranged at a position that is offset to the radial inside of a pitch diameter P of the spherical roller bearing 1. Preferably, the position corresponds to 10 to 40 % of the maximal diameter Dw of the spherical roller 12 used in the spherical roller bearing 100. In the shown embodiment, the cage bar 6 is arranged such that a contact between the spherical roller 12 and the cage bar 6 is at a position that corresponds to about 30% of a maximal diameter Dw of the spherical roller 12.

Arranging the cage bars 6 offset to the pitch diameter P may allow to decrease a minimal distance Dm (not illustrated) between the raceways of two neighboring rollers 12 such that it may be possible to increase the number of rollers 12 used in a set of rollers 112. The minimal distance Dm is determined in a condition in which the spherical rollers 8 are equally spaced in the circumferentially direction.

In particular, a ratio Dm/Dw of the minimal distance in the circumferential direction between the raceways of two neighboring spherical rollers 12 of the first and/or second set of spherical rollers to the maximal roller diameter Dw is equal to or below 0.11, preferably 0.09, and even more preferred 0.075%, when the spherical rollers 12 of the respective set of rollers 12 are equally spaced in the circumferential direction.

Alternatively or additionally, the minimal distance Dm in the circumferential direction between the raceways of two neighboring spherical rollers of the first and/or second set of spherical rollers may be equal to or below a value obtained by the following equation:

$$Dm \leq 0.0064 \, mm \, \cdot \, (\, ln \, (P \cdot Dw + Dw)\,)^3$$

when the spherical rollers 12 of the respective set of rollers 112 are equally spaced in the circumferentially direction, wherein P is the pitch diameter and Dw is the maximal roller diameter, wherein the millimeter values of P and Dw are to be used as dimensionless variables.

Fig. 2 to 4 show detailed views of the bearing cage 1 for the spherical roller bearing 100. As mentioned above, the bearing cage 1 comprises a first cage ring 2 extending in a circumferential direction of the bearing, a second cage ring 4 extending in the circumferential direction of the bearing and a plurality of cage bars 6. Each cage bar 6 extends substantially in an axial direction A of the bearing such that it connects the first cage ring 2 with the second cage ring 4, thereby forming the pockets 8. Each pocket 8 is configured to receive a single spherical roller 12.

Furthermore, the bearing cage 1 is provided with a first contact area 10-1 and a second contact area 10-2, which are axially spaced apart, at the circumferential side faces of each cage bar 8. These contact areas 10 are configured to contact a running surface 14 of the roller 12. Further, also the first cage ring 2 and the second cage ring 4, can be provided with contact areas 11-1, 11-2, which are adapted to contact the side faces of the spherical roller.

The bearing cage 1 is made from a sheet metal plate. For example, a geometry of the bearing cage 1 may be formed by bending and afterwards pressing the pockets and/or otherwise milling the pockets. The running surfaces or contact areas 10 may be formed afterwards by coining. This may allow to reduce the manufacturing costs for the bearing cage.

In order to reduce the risk of an undesired edge contact between the running surface 14 of the roller 12 and the bearing cage 1, the first and second contact area 10-1,10-2 and the optional contact area 11 has a profile 16 with a convex curvature 17 in radial direction R. The convex curvature 17 extends in axial direction A over the entire first and second contact area 10-1 and 10-2. In the shown embodiment, both contact areas 10-1; 10-2 are separated by an area 30 having in axial direction a concave curvature. This area 30 may or may not be in contact with the spherical roller 12. In case it is in contact with the spherical roller 12, then the entire length of the cage bar 6 is provided with the profile 16, and the first and second contact area 10-1, 10-2 are merged.

Additionally, also at least one of the first and second contact area 10-1; 10-2 may have in axial direction A a concave curvature, which is adapted to a curvature of the spherical roller 12, so that an osculation is provided between the spherical roller 12 and said contact area.

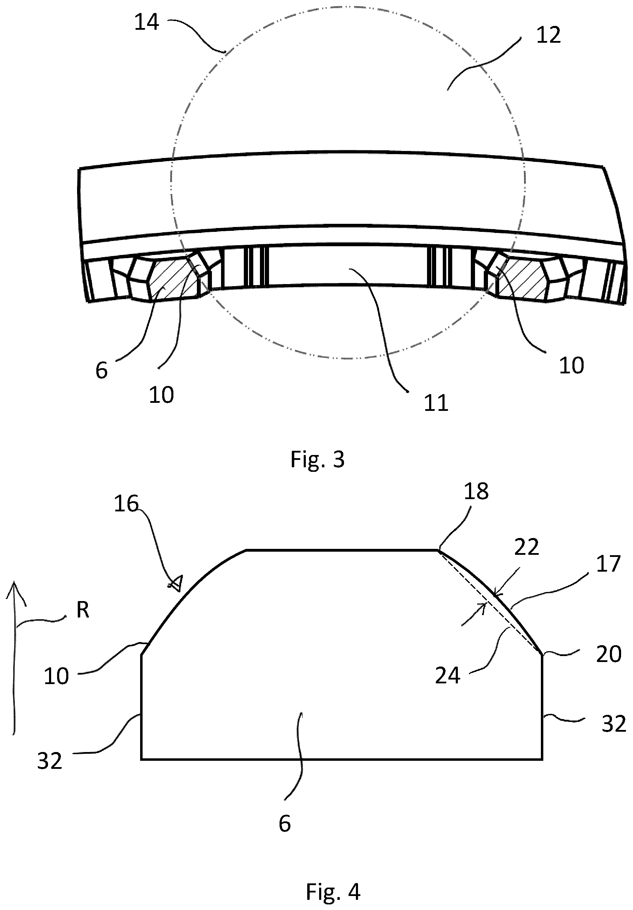

As can be seen in Fig. 3, a difference 22 between the convex curvature 17 and a straight line 24 at a position of a maximal distance (see arrows) between the profile 17 and the straight line is at least 0.1mm, preferably at least 0.3mm, and even more preferred at least 0.5mm. The convex curvature 17 is adapted to reduce the risk that a lubricant film on the running surface 14 of the roller 12 is scraped off by a contact between an edge of the contact areas 10 such as edges 18, 20 and/or to improve a transport of lubricant from one radial side to the other.

There are a variety of options for configuring the convex curvature 17. For example, the convex curvature 17 may have a first section and a second section, wherein the first and second section each have a convex curvature, which differ from another.

For example, the first section of the convex curvature may be arranged in the middle of the contact area 10, wherein the second section of the convex curvature may be arranged at an edge 18, 20 of the contact area 10.

As can be further seen in Fig. 3, the profile 16 may be a combination of a convex curvature 17 in the areas of the contact areas 10 and another shape of curvature, such as straight or concave in a non-contact area 32.

In summary, by providing at least a first and second contact area 10 with a convex curvature 17 in radial direction at the cage bars 6, it is possible to reduce the risk of an undesired edge contact between a running surface 14 of the roller 12 and the bearing cage 1.

This may further reduce the risk that a lubricant film may be scraped off at a point and/or line of contact between the cage and the roller. In addition, this may also lead to a larger gap between the roller element 12 and the contact area 10 allowing for an improved lubricant ingress into the gap and/or for a buildup of a larger lubricating film.

## Reference numerals

| 1 | bearing cage |
|------|--------------|
| 2 | first cage ring |
| 4 | second cage ring |
| 6 | cage bar |
| 8 | pocket |
| 10 | contact areas at the cage bar |
| 11 | contact area at the cage rings |
| 12 | roller |
| 14 | running surface |
| 16 | profile |
| 17 | convex curvature |
| 18 | edge |
| 20 | edge |
| 22 | difference |
| 24 | straight line |
| 28 | flange at first cage ring |
| 29 | flange at second cage ring |
| 30 | area with concave curvature at the cage bar |
| 32 | are with straight section at the cage bar |
| 100 | spherical roller bearing |
| 104 | outer ring |
| 106 | inner ring |
| 105 | lubrication inlet |
| 109 | raceway |
| 111 | raceway |
| 112 | set of spherical rollers |
| A | axial direction |
| R | radial direction |
| P | pitch diameter |
| X | axis of rotation |
| Dw | maximal diameter of spherical roller |
| α | opering angle |

## Claims

1. Spherical roller (100) bearing having at least an outer ring (104) with a diameter of at least 499 mm, an inner ring (106), and two sets of spherical rollers (12) which are rolling along raceways (109; 11) formed on the outer and inner ring (104; 106), wherein each set of spherical rollers (112) is accommodated in a bearing cage (1), wherein each bearing cage (1) comprises at least:

a first cage ring (2) extending in a circumferential direction of the bearing, a second cage ring (4) extending in the circumferential direction of the bearing and a plurality of cage bars (6), each cage bar (6) extending substantially in an axial direction (A) of the bearing from the first cage ring (2) to the second cage ring (4) such that closed pockets (8) are formed, wherein each pocket (8) is configured to receive one spherical roller (12), wherein each cage bar separates two adjacent pockets and has a circumferential side face facing the first pocket and a second circumferential side face facing the second pocket, **characterized in that** each circumferential side face of the bearing cage bars (6) is, in axial direction, provided with a first contact area (10-1) and second contact area (10-2) configured to at least partially contact the spherical roller (12), wherein at least one of the first and second contact areas (10) has a convex curvature (17) in radial direction (R).

2. Spherical roller bearing (100) according to claim 1, wherein the convex curvature (17) extends in axial direction (A) along the entire contact area (10).

3. Spherical roller bearing (100) according to claim 1 or 2, wherein at least one contact area (10) has in axial direction (A) a concave curvature, which is adapted to a curvature of the spherical roller (12), so that an osculation is provided between the spherical roller (12) and said contact area.

4. Spherical roller bearing (100) according to any one of the preceding claims, wherein between the first and second contact area (10) the cage bar (6) has an area (30) with a concave curvature in axial direction.

5. Spherical roller bearing (100) according to any one of the preceding claims, wherein the cage bars (6) extend substantially straight from the first cage ring (2) to the second cage ring (4).

6. Spherical roller bearing (100) according to any one of the previous claims, wherein at the first cage ring (2) and/or second cage ring (4) at least one further contact area (11) is arranged, which has a convex curvature.

7. Spherical roller bearing (100) according to any one of the previous claims, wherein the convex curvature (17) elevates from an imaginary flat plane (24) by at least 0.1mm, preferably at least 0.3mm, and even more preferred at least 0.5mm.

8. Spherical roller bearing (100) according to any one of the preceding claims, wherein the convex curvature (17) is arranged in radial direction in the middle of at least one of the contact areas (10).

9. Spherical roller bearing (100) according to any one of the preceding claims, wherein the convex curvature (17) is arranged in radial direction at an edge (18; 20) of at least one of the contact areas (10).

10. Spherical roller bearing (100) according to any one of the preceding claims, wherein at least one of the contact areas (10) comprises in radial direction at least a first section and a second section, wherein at least one of the first and second section has the convex curvature (17).

11. Spherical roller bearing (100) according to claim 10, wherein the first section has a first convex curvature, and the second section has a second convex curvature, wherein the first convex curvature is different from the second convex curvature.

12. Spherical roller bearing (100) according to claim 11, wherein the first section is arranged in the middle of at least one contact area (10; 11) and the second section is arranged at an edge of said contact area (10; 11).

13. Spherical roller bearing (100) according to any one of the previous claims, wherein the cage bars (6) are arranged radially inward of a pitch diameter (P).

100

Fig. 1

Fig. 2

Fig. 3

Fig. 4

Europäisches
Patentamt
European
Patent Office
Office européen
des brevets

## EUROPEAN SEARCH REPORT

**Application Number**

EP 25 19 0235

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2018 168988 A (NTN TOYO BEARING CO LTD) 1 November 2018 (2018-11-01) | 1-3,5,7 | INV.<br>F16C19/38 |
| Y | * figures 1,3,7 * | 6,13 | F16C23/08 |
| A | | 4,8-12 | F16C33/46<br>F16C33/48 |
| | ----- | | F16C33/54 |
| X | US 6 425 182 B1 (HONDA AKIYOSHI [JP] ET AL) 30 July 2002 (2002-07-30) | 1-5,7,9, 10,13 | |
| A | * page 5, column 9, line 19 - line 27; figures 1,5,7,8,10 * | 6,8,11, 12 | |
| | ----- | | |
| X | JP 2014 025529 A (NTN TOYO BEARING CO LTD) 6 February 2014 (2014-02-06) | 1-7,9,10 | |
| A | * figures 1,2,3,4,6 * | 8,11-13 | |
| | ----- | | |
| X | CN 102 829 083 A (NTN SNR ROULEMENTS) 19 December 2012 (2012-12-19) | 1-5,7,9, 10 | |
| A | * figures 2-5 * | 6,8, 11-13 | |
| | ----- | | |
| X | DE 20 2006 004735 U1 (SCHAEFFLER KG [DE]) 1 June 2006 (2006-06-01) | 1,2,7,8 | **TECHNICAL FIELDS SEARCHED (IPC)** |
| A | * figure 3 * | 3-6,9-13 | F16C |
| | ----- | | |
| Y | CN 102 099 591 A (NTN TOYO BEARING CO LTD) 15 June 2011 (2011-06-15) | 6,13 | |
| A | * figures 1-21 * | 1-5,7-12 | |
| | ----- | | |

The present search report has been drawn up for all claims

| Place of search | Date of completion of the search | Examiner |
|---|---|---|
| The Hague | 5 November 2025 | Kovács, Endre |

EPO FORM 1503 03.82 (P04C01)

## ANNEX TO THE EUROPEAN SEARCH REPORT
## ON EUROPEAN PATENT APPLICATION NO.

EP 25 19 0235

This annex lists the patent family members relating to the patent documents cited in the above-mentioned European search report.
The members are as contained in the European Patent Office EDP file on
The European Patent Office is in no way liable for these particulars which are merely given for the purpose of information.

05-11-2025

| Patent document cited in search report | Publication date | Patent family member(s) | Publication date |
|---|---|---|---|
| JP 2018168988 A | 01-11-2018 | NONE | |
| US 6425182 B1 | 30-07-2002 | DE 19925700 A1 | 16-12-1999 |
| | | DE 19964525 B4 | 26-11-2009 |
| | | JP 4743261 B2 | 10-08-2011 |
| | | JP 2009041777 A | 26-02-2009 |
| | | US 6186669 B1 | 13-02-2001 |
| | | US 6425182 B1 | 30-07-2002 |
| JP 2014025529 A | 06-02-2014 | JP 6141606 B2 | 07-06-2017 |
| | | JP 2014025529 A | 06-02-2014 |
| CN 102829083 A | 19-12-2012 | CN 102829083 A | 19-12-2012 |
| | | EP 2535610 A1 | 19-12-2012 |
| | | FR 2976640 A1 | 21-12-2012 |
| | | JP 6158481 B2 | 05-07-2017 |
| | | JP 2013002633 A | 07-01-2013 |
| DE 202006004735 U1 | 01-06-2006 | DE 202006004735 U1 | 01-06-2006 |
| | | WO 2007110038 A1 | 04-10-2007 |
| CN 102099591 A | 15-06-2011 | CN 102099591 A | 15-06-2011 |
| | | EP 2309144 A1 | 13-04-2011 |
| | | US 2011116734 A1 | 19-05-2011 |
| | | WO 2010007979 A1 | 21-01-2010 |

EPO FORM P0459

For more details about this annex : see Official Journal of the European Patent Office, No. 12/82